# EUROPÄISCHE PATENTSCHRIFT

(11) **EP 2 522 484 B1**
(45) Veröffentlichungstag und Bekanntmachung des Hinweises auf die Patenterteilung: **02.05.2018**
(21) Anmeldenummer: 12167262.0
(22) Anmeldetag: 09.05.2012
(51) Int. Cl.: B29C 49/56, B29C 49/06, B29C 49/36, B29C 49/48

(54) **Vorrichtung und Verfahren zum Umformen von Kunststoffvorformlingen zu Kunststoffbehältnissen mit magnetisch betätigter Verriegelung**
Device and process for deforming plastic preforms into plastic containers with magnetically actuated lock
Dispositif et procédé de déformation d'ébauches en plastique en conteneurs en plastique dotés d'un verrouillage à actionnement magnétique

(30) Priorität: 11.05.2011 DE 102011101262
(43) Veröffentlichungstag der Anmeldung: 14.11.2012
(73) Patentinhaber: Krones AG, 93073 Neutraubling (DE)
(72) Erfinder: Weiß, Johannes, 93073 Neutraubling (DE)
(74) Vertreter: Bittner, Bernhard

(56) Entgegenhaltungen:
- EP-A1- 1 048 435
- EP-A1- 2 130 663
- EP-A1- 2 199 061
- EP-A2- 2 292 404
- CN-A- 101 890 805
- DE-A1-102009 007 717
- DE-U1- 29 913 182
- RU-C1- 2 184 654

## Beschreibung

Die vorliegende Erfindung bezieht sich auf eine Vorrichtung zum Umformen von Kunststoffvorformlingen zu Kunststoffbehältnissen. Derartige Vorrichtungen sind aus dem Stand der Technik seit langem bekannt. Dabei werden üblicherweise erwärmte Kunststoffvorformlinge mittels eines gasförmigen Mediums und insbesondere mittels Druckluft zu Kunststoffbehältnissen expandiert. Zu diesem Zweck werden die Kunststoffvorformlinge in eine Blasform eingebracht und anschließend insbesondere über ihre Mündung mit Druckluft beaufschlagt. Dies bedeutet, dass während des Expansionsvorgangs auch die Blasform erheblichen Kräften unterworfen ist. Daher ist es aus dem Stand der Technik ebenfalls bekannt, einen Verriegelungsmechanismus vorzusehen, der die Blasformhälften zumindest während des Expansionsvorgangs miteinander verriegelt. Für die Ansteuerung dieses Verriegelungsmechanismus werden im Stand der Technik üblicherweise Führungskurven vorgesehen, entlang derer Führungsrollen laufen, wobei durch diese Bewegung ein Verriegelungselement bewegt wird.
Aus der EP 2 199 061 ist weiterhin eine elektrisch betriebene Blasformmaschine und ein entsprechendes Blasformverfahren bekannt. Bei dieser Maschine ist ein elektromotorischer Antrieb zum Ansteuern der Verriegelungselemente vorgesehen.

DE102009007717 A offenbart eine Vorrichtung und ein Verfahren zum Umformen von Kunststoffvorformlingen zu Kunststoffbehältnissen, wobei ein magnetisches Element vorhanden ist, das in einem Führungselement umfasst ist, dass an eine Führungskurve herangezogen ist, wobei sich bei der Führungskurve um eine Verriegelungskurve eines Formträgers handeln kann.

Der vorliegenden Erfindung liegt die Aufgabe zugrunde, die aus dem Stand der Technik bekannten Verriegelungsmechanismen zu vereinfachen, um beispielsweise auf die im Stand der Technik üblicherweise nötigen geschmierten Rollen verzichten zu können.
Dies wird erfindungsgemäß durch eine Vorrichtung nach Anspruch 1 und ein Verfahren nach Anspruch 9 erreicht. Vorteilhafte Ausführungsformen und Weiterbildungen sind Gegenstand der Unteransprüche.
Eine erfindungsgemäße Vorrichtung zum Umformen von Kunststoffvorformlingen zu Kunststoffbehältnissen wird in dem Anspruch 1 definiert. Es wird erfindungsgemäß vorgeschlagen, mit Hilfe eines wenigstens zeitweise magnetischen Elements, beispielsweise einem Elektromagneten eine berührungslose und somit reibfreie wartungslose Lösung zu schaffen, um die Verriegelung der Blasform zu bewirken. Erfindungsgemäß ist das erste Verriegelungselement bezüglich einer vorgegebenen Schwenkachse schwenkbar. Besonders bevorzugt liegt ein maximaler Schwenkwinkel des ersten Verriegelungselements zwischen 3° und 40°, bevorzugt zwischen 5° und 35° und besonders bevorzugt zwischen 5° und 30°. Diese zweite Schwenkachse, bezüglich derer das erste Verriegelungselement schwenkbar ist, verläuft bevorzugt im Wesentlichen parallel zu der Schwenkachse, um welche das Blasformträgerteil schwenkbar ist. Unter im Wesentlichen parallel wird dabei verstanden, dass ein Kippwinkel zwischen diesen beiden Schwenkachsen dem Betrag nach kleiner ist als 15°, bevorzugt kleiner als 10°, bevorzugt kleiner als 5°.

Vorteilhaft ist das magnetische Element stationär gegenüber der Blasstation angeordnet, beispielsweise an einem stationären Träger. Dabei ist es möglich, dass das magnetische Element jeweils aktiviert wird, wenn das Verriegelungselement zum Verriegeln bewegt werden soll. Das magnetische Element kann jedoch im Arbeitsbetrieb auch permanent aktiviert sein. Es wäre jedoch auch denkbar, dass sich das magnetische Element mit der Blasstation bewegt und jeweils dann aktiviert wird, wenn die Blasstation verriegelt werden soll.

Bei einer weiteren vorteilhaften Ausführungsform weist das magnetische Element einen Elektromagneten auf.

Vorteilhaft ist an der Blasstation ein zweites magnetisches Element vorgesehen, welches das Verriegelungselement zeitweise in einer Verriegelungsstellung hält. Dieses zweite magnetische Element kann dabei als Sicherung dienen, um den Verriegelungszustand der Blasform sicherzustellen. Es wäre jedoch auch möglich, dass ein mechanisch wirkendes Arretiermittel vorgesehen ist, welches einen Verriegelungszustand aufrecht erhält. Vorteilhaft handelt es sich jedoch bei diesem zweiten magnetischen Element um einen Permanentmagneten. Dieses zweite magnetische Element bewegt sich vorteilhaft mit der Blasstation mit und ist besonders bevorzugt ortsfest an einem der Blasformträgerteile angeordnet.

Bei einer weiteren vorteilhaften Ausführungsform ist, insbesondere an der Blasstation, ein drittes magnetisches Element vorgesehen, welches das Verriegelungselement wenigstens zeitweise in einer nicht verriegelten Stellung hält. Durch dieses dritte magnetische Element kann verhindert werden, dass der Verriegelungsmechanismus versehentlich in einem verriegelten Zustand übergeht und auf diese Weise beispielsweise Blockaden der Blasstation auftreten können.

Bei einer weiteren vorteilhaften Ausführungsform weist die Vorrichtung ein insbesondere stationär angeordnetes Bewegungserzeugungselement auf, welches das Verriegelungselement bewegt. Insbesondere wird dabei das Verriegelungselement durch einen mechanischen Kontakt bewegt. Dieses Bewegungserzeugungselement dient vorteilhaft als Sicherungsmechanismus, falls der magnetische Schließmechanismus versagen sollte. Dabei ist vorteilhaft dieses Bewegungserzeugungselement an einer Position angeordnet, welche in der Bewegungsrichtung der Blasstation dem magnetischen Element nachgeordnet ist bzw. in einer Position, in der die Verriegelung im fehlerfreien Betrieb bereits abgeschlossen wäre. Damit kommt vorteilhaft dieses Bewegungserzeugungselement nur zum Einsatz, wenn die Verriegelung nicht bereits ordnungsgemäß durch das magnetische Element verschlossen wurde. In der Regel kommt es daher nicht zu einem Eingreifen des Bewegungserzeugungselements. Es wäre auch möglich, dass die Vorrichtung ein weiteres Bewegungserzeugungselement aufweist, welches den Verriegelungsmechanismus entriegelt, wenn eine entsprechende magnetische Entriegelung versagt.
Bei einer weiteren vorteilhaften Ausführungsform weist die Vorrichtung ein zweites wenigstens zeitweise magnetisches Element auf, bezüglich dessen das erste Verriegelungselement beweglich ist und welches durch eine magnetische Wechselwirkung eine Bewegung des ersten Verriegelungselements zum Entriegeln der Blasformträgerteile bewirkt. Es wird daher vorgeschlagen, dass auch das Entriegeln der Blasstation bzw. der Blasformträger in magnetischer und damit insbesondere berührungsloser Weise erfolgt.

Vorteilhaft sind das erste magnetische Element und ein viertes magnetisches Element an unterschiedlichen Stellen entlang des Bewegungspfades der Blasstation angeordnet. Dies beruht darauf, dass auch das Öffnen und Schließen der Blasstation und auch das Verriegeln und Entriegeln an unterschiedlichen Positionen der Blasstation bezüglich deren Transportpfad erfolgen.
Bei einer weiteren vorteilhaften Ausführungsform, weist die Vorrichtung einen Reinraum auf, innerhalb dessen die Blasstation transportiert wird, wobei vorteilhaft dieser Reinraum mittels wenigstens einer Wandung gegenüber einer Umgebung abgetrennt bzw. getrennt angeordnet ist. Vorteilhaft ist dabei ein kanalartiger Reinraum vorgesehen, der die Blasstation umgibt. Bei einer weiteren vorteilhaften Ausführungsform ist an dem beweglichen Träger eine Vielzahl von vorteilhaft gleichartigen Blasstationen angeordnet. Diese Blasstationen werden dabei vorteilhaft sämtlich durch den besagten Reinraum gefördert. Vorteilhaft bildet wenigstens eine Wandung auch eine den Reinraum begrenzende Wandung.

Das magnetische Element kann dabei außerhalb des besagten Reinraums angeordnet sein, es wäre jedoch auch möglich, dass das magnetische Element beispielsweise an einer Wandung, welche den Reinraum begrenzt, vorgesehen ist. Vorteilhaft ist dabei wenigstens eine den Reinraum begrenzende Wand gegenüber einer zweiten den Reinraum begrenzenden Wand beweglich. Besonders vorteilhaft können dabei Dichtungseinrichtungen vorgesehen sein, welche bewegliche Wände des Reinraums gegenüber unbeweglichen Wänden des Reinraums abdichten, beispielsweise in der Art von sogenannten Wasserschlössern.
Die vorliegende Erfindung ist weiterhin auf ein Verfahren zum Umformen von Kunststoffvorformlingen zu Kunststoffbehältnissen gemäß Anspruch 9 gerichtet. Vorteilhaft ist das besagte magnetische Element stationär angeordnet. Anstelle einer Schwenkbewegung könnte gemäß einer nicht erfinderischen Ausführungsform das Verriegelungselement jedoch auch eine Verschiebebewegung und insbesondere eine kleinere Verschiebebewegung zum Verriegeln der Blasformträgerteile ausführen. So könnte das Verriegelungselement auch beispielsweise als stift- oder bolzenartiger Körper ausgeführt sein, der zum Verriegeln in entsprechende Ausnehmungen oder Löcher, die fest gegenüber dem jeweils anderen Blasformträgerteil angeordnet sind, eingreift.
Weitere Vorteile und Ausführungsformen ergeben sich aus den beigefügten Zeichnungen. Darin zeigen:
- Fig. 1: eine schematische Darstellung einer Anlage zum Herstellen von Kunststoffbehältnissen;
- Fig. 2: eine Ansicht eines Reinraums im Bereich einer Blasstation;
- Fig. 3a, b: zwei Darstellungen einer erfindungsgemäßen Vorrichtung;
- Fig. 4a, 4b: zwei weitere Ansicht der in Fig. 3 gezeigten Vorrichtung; und
- Fig. 5: eine weitere Ansicht einer erfindungsgemäßen Vorrichtung.

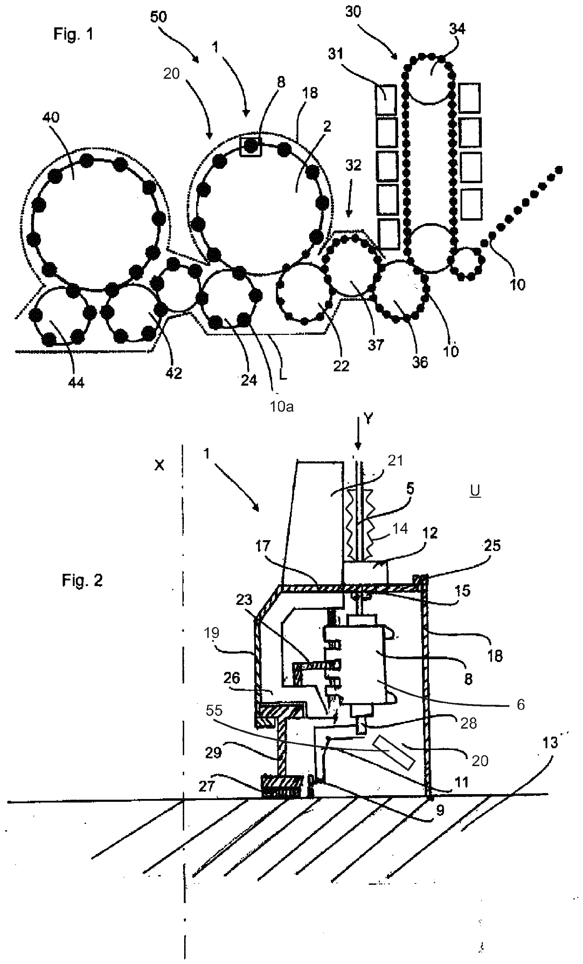

Figur 1 zeigt eine schematische Darstellung einer Anlage zum Herstellen von Kunststoffbehältnissen. Diese Anlage 50 weist eine Heizeinrichtung 30 auf, in der Kunststoffvorformlinge 10 erwärmt werden. Dabei werden diese Kunststoffvorformlinge 10 mittels einer Transporteinrichtung 34, wie hier einer umlaufenden Kette, durch diese Heizeinrichtung 30 geführt und dabei mit einer Vielzahl von Heizelementen 31 erwärmt. An diese Heizeinrichtung 30 schließt sich eine Übergabeeinheit 36 an, welche die Vorformlinge 10 an eine Sterilisationseinrichtung 32 übergibt. Diese Sterilisationseinrichtung 32 weist dabei hier ebenfalls ein Transportrad 37 auf und an diesem Transportrad 37 oder auch stationär können Sterilisationselemente angeordnet sein. In diesem Bereich ist beispielsweise eine Sterilisation durch Wasserstoffperoxidgas oder auch durch elektromagnetische Strahlung möglich. Insbesondere wird in diesem Bereich eine Innensterilisation der Vorformlinge durchgeführt.

Das Bezugszeichen 20 bezeichnet in seiner Gesamtheit einen Reinraum, dessen Außenbegrenzungen hier durch die punktierte Linie L angedeutet sind. In einer weiteren bevorzugten Ausführungsform ist der Reinraum 20 nicht nur im Bereich des Transportrads 2 und der Befüllungseinrichtung 40 angeordnet, sondern beginnt möglicherweise schon im Bereich der Heizeinrichtung 30, der Sterilisationseinrichtung 32, der Kunststoffvorformlingzuführung und/oder der Kunststoffvorformlingherstellung. Man erkennt, dass dieser Reinraum 20 in dem Bereich der Sterilisationseinheit 32 beginnt. In diesem Bereich können Schleuseneinrichtungen vorgesehen sein, um die Kunststoffvorformlinge in den Reinraum 20 einzuführen, ohne dass dabei zu viel Gas innerhalb des Reinraums strömt und so verloren geht.

Der Reinraum ist, wie durch die gestrichelte Linie L angedeutet, an die Außengestalt der einzelnen Anlagenkomponenten angepasst. Auf diese Weise kann das Volumen des Reinraums reduziert werden.

Das Bezugszeichen 1 bezeichnet in ihrer Gesamtheit eine Umformungsvorrichtung, bei der an einem Transportrad 2 eine Vielzahl von Blasstationen bzw. Umformungsstationen 8 angeordnet ist, wobei hier lediglich eine dieser Blasstationen 8 dargestellt ist. Mit diesen Blasstationen 8 werden die Kunststoffvorformlinge 10 zu Behältnissen 10a expandiert. Obwohl hier nicht detailliert gezeigt, befindet sich nicht der gesamte Bereich der Transporteinrichtung 2 innerhalb des Reinraums 20, sondern der Reinraum 20 bzw. Isolator ist gewissermaßen als Mini-Isolator innerhalb der gesamten Vorrichtung realisiert. So wäre es möglich, dass der Reinraum zumindest im Bereich der Umformungsvorrichtung 1 kanalartig ausgeführt ist. Das Bezugszeichen 22 bezieht sich auf eine Zuführeinrichtung, welche die Vorformlinge an die Umformungseinrichtung 1 übergibt und das Bezugszeichen 24 auf eine Abführeinrichtung, welche die hergestellten Kunststoffbehältnisse 10a von der Umformungsvorrichtung 1 abführt. Man erkennt, dass der Reinraum 20 in dem Bereich der Zuführeinrichtung 22 und der Abführeinrichtung 24 jeweils Ausnehmungen aufweist, welche diese Einrichtungen 22, 24 aufnehmen. Auf diese Weise kann in besonders vorteilhafter Weise eine Übergabe der Kunststoffvorformlinge 10 an die Umformungsvorrichtung 1 bzw. eine Übernahme der Kunststoffbehältnisse 10a von der Umformungsvorrichtung 1 erreicht werden.
Mit einer Übergabeeinheit 42 werden die expandierten Kunststoffbehältnisse an eine Befüllungseinrichtung 40 übergeben und von dieser Befüllungseinrichtung 40 anschließend über eine weitere Transporteinheit 44 abgeführt. Dabei befindet sich auch die Befüllungseinrichtung 40 innerhalb des besagten Reinraums 20. Auch im Falle der Befüllungseinrichtung wäre es möglich, dass nicht die gesamte Befüllungseinrichtung 40 mit beispielsweise einem Reservoir für ein Getränk vollständig innerhalb des Reinraums 20 angeordnet sind, sondern auch hier lediglich diejenigen Bereiche, in denen tatsächlich die Behältnisse geführt werden. Insoweit könnte auch die Befüllungseinrichtung in ähnlicher Weise aufgebaut sein wie die Vorrichtung 1 zum Umformen von Kunststoffvorformlingen 10.
Wie erwähnt, ist der Reinraum 20 im Bereich der Vorrichtung 1 auf einen geringst möglichen Bereich reduziert, nämlich im Wesentlichen auf die Blasstationen 8 selbst. Durch diese kleinbauende Gestaltung des Reinraums 20 ist es leichter und schneller möglich, einen Reinraum überhaupt herzustellen und auch die Sterilhaltung in der Betriebsphase ist weniger aufwändig. Auch wird weniger Sterilluft benötigt, was zu kleineren Filteranlagen führt und auch die Gefahr von unkontrollierter Wirbelbildung wird reduziert.

Figur 2 zeigt eine Detaildarstellung der Vorrichtung 1 im Bereich einer Blasstation 8. Eine Vielzahl derartiger Blasstationen 8 wird mit einer Transporteinrichtung 2 bzw. einem Träger drehend um eine Achse X bewegt. Die Blasstation 8 ist, wie in Figur 2 ersichtlich, innerhalb des Reinraums 20, der hier kanalartig ausgebildet ist, geführt. Dieser Reinraum 20 wird abgeschlossen durch eine bewegliche Seitenwand 19 und einen einteilig mit dieser Seitenwand 19 ausgebildeten Deckel 17. Diese Seitenwand 19 und der Deckel 17 drehen dabei mit der Blasstation 8 mit.

Das Bezugszeichen 18 bezieht sich auf eine weitere Wandung, welche den Reinraum 20 begrenzt. Diese Wandung 18 ist hier eine außen liegende Wandung, welche stationär angeordnet ist. Zwischen dem Deckel 17 und der Wandung 18 ist eine Dichtungseinrichtung 25 vorgesehen, welche die gegeneinander beweglichen Elemente 17 und 18 gegeneinander abdichtet, beispielsweise, wie oben erwähnt, unter Verwendung eines Wasserschlosses. Der untere Bereich der Wandung 18 ist fest und abdichtend an einem Boden 13 angeordnet. Innerhalb des Reinraums 20 und hier unmittelbar an der Wandung 19 anliegend ist ein Träger 26 vorgesehen, der sich ebenfalls drehend bewegt und an dem wiederum eine Halteeinrichtung 23 vorgesehen ist, welche die Blasstation 8 hält.

Das Bezugszeichen 11 bezieht sich auf eine Folgeeinrichtung, welche von einer Führungskurve 9 betätigt werden kann, um die Blasstation auf ihrem Weg durch den Reinraum 20 zu öffnen und zu schließen, um insbesondere den Kunststoffvorformling in die Blasstation einzulegen und um ihn auch wieder zu entnehmen. Dabei ist eine Führungskurve 9 auch innerhalb des Reinraums 20 angeordnet. Es wäre jedoch beispielsweise auch möglich, etwa bereits einen Abschnitt 11 unterhalb der einzelnen Blasstationen 8 aus dem Reinraum 20 herauszuführen.

Die Transporteinrichtung 2 kann noch weitere Elemente aufweisen, welche oberhalb des Reinraums 20 angeordnet sind.

Der Träger 26 ist dabei fest auf einem Haltekörper 29 angeordnet und dieser Haltekörper ist wiederum beweglich gegenüber dem Boden 13. Dabei bezieht sich das Bezugszeichen 27 auf eine weitere Dichtungseinrichtung, welche auch in diesem Bereich eine Abdichtung der gegeneinander beweglichen Bereiche 13 und 29 bewirkt.

Das Bezugszeichen 5 bezieht sich auf eine Reckstange, welche gegenüber der Blasstation beweglich ist, um die Kunststoffvorformlinge 10 in ihrer Längsrichtung zu recken. Dabei ist auf dem Deckel 17 hier ein Schlitten 12 angeordnet, demgegenüber die Reckstange in der Richtung Y beweglich ist. Das Bezugszeichen 21 bezieht sich auf eine weitere Halterung für diesen Schlitten 12 der Reckstange 5.

Man erkennt, dass bestimmte Bereiche der Reckstange während des Blasvorgangs sowohl außerhalb des Reinraums 20 als auch innerhalb des Reinraums 20 sind. Zu diesem Zweck ist es möglich, außerhalb des Reinraums 20 bzw. oberhalb des Schlittens 12 eine Schutzeinrichtung wie einen Faltenbalg 14 vorzusehen, der die Reckstange 5 umgibt, so dass kein Bereich der Reckstange 5 unmittelbar mit der Außenumgebung in Berührung kommt. Das Bezugszeichen U kennzeichnet die (unsterile) Umgebung des Reinraums 20. Das Bezugszeichen 28 kennzeichnet einen Träger zum Tragen einer Bodenform, welche ebenfalls einen Bestandteil der Blasform 4 ausbildet. Dieser Träger ist dabei ebenfalls in der Richtung Y bewegbar.

Das Bezugszeichen 55 bezieht sich auf eine Sterilisationseinrichtung, welche hier bevorzugt im Inneren des Reinraums 20 angeordnet ist und zum Sterilisieren der einzelnen Umformungsstationen bzw. Bestandteilen dieser Umformungsstationen 8 dient. Diese Sterilisationseinrichtung 55 kann dabei die Umformungsstationen 8 beispielsweise mit Wasserstoffperoxid oder einem anderen Sterilisationsmittel beaufschlagen. Dabei kann die Sterilisationseinrichtung 55 stationär angeordnet sein und die Umformungsstationen können sich gegenüber dieser Sterilisationseinrichtung 55 bewegen. Diese Sterilisationseinrichtung bzw. Beaufschlagungseinrichtung 55 kann sich am Transportrad 2 oder an der stehenden Wandung 18 befinden oder generell stationär angeordnet sein und aus Düsen o ähnlichem bestehen. Zudem ist es vorteilhaft, Sterilluft zum Sterilisieren des Reinraums 20 über das Lüftungssystem in den Reinraum 20 einzubringen.

Die (nicht gezeigten) Blasformen sind innerhalb der Blasformträger 6 angeordnet. Genauer können dabei zwei Blasformträgerteile angeordnet sein, die gegenüber einander schwenkbar sind und jeweils ein Blasformteil halten. Durch diesen Schwenkvorgang können die Blasformen zum Einbringen von Kunststoffvorformlingen und zum Entnehmen fertig geblasener Behältnisse geöffnet werden. Diese Blasformträger und Blasformen sind dabei ebenfalls innerhalb des Reinraums angeordnet.
Es wäre jedoch auch (anders als in Fig. 2 gezeigt) möglich und bevorzugt, dass die Transporteinrichtung 2 bzw. der Träger einen C-förmigen Außenumfang aufweist, der auch teilweise die Außenwandungen des Reinraums ausbildet. Damit dreht sich hier diese C - förmige Reinraumwand mit der Transporteinrichtung 2 d.h. dem Blasrad. Bei dieser Ausführungsform ist die untere Begrenzung des Reinraums von dem Boden 13 beabstandet und bewegt sich relativ zu dem Boden. Auf diese Weise kann der Reinraum noch kleiner gestaltet werden als in Fig.2 gezeigt. Eine Abdichtung dieses C- förmigen Profils der Transporteinrichtung, welches hier sowohl eine Innenwandung als auch eine untere und obere Abdeckung des Reinraums ausbildet, findet hier bevorzugt nur gegenüber der Außenwandung des Reinraums statt. Diese Außenwandung ist dabei vorteilhaft stationär angeordnet.

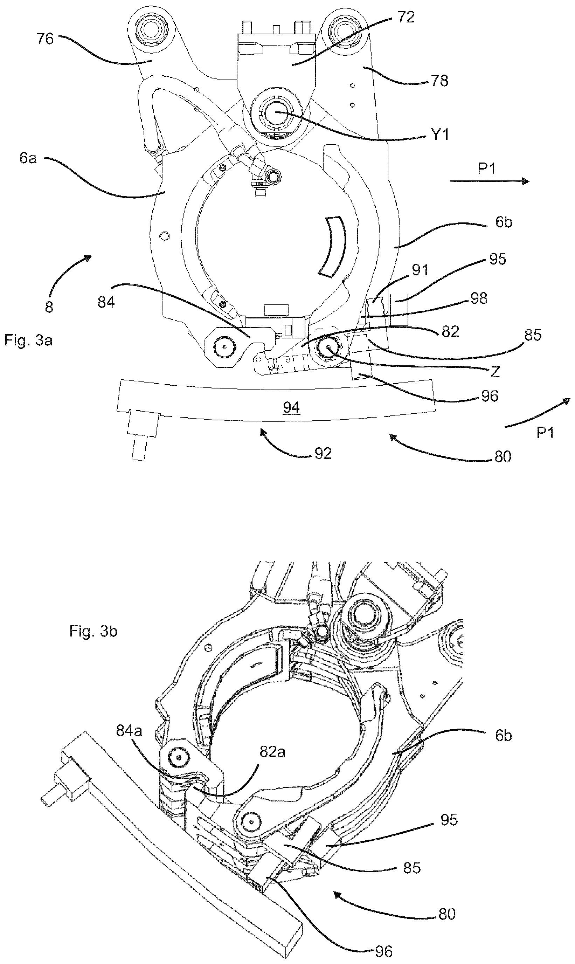

Figuren 3a und 3b zeigen eine Blasstation 8 in einer geöffneten Stellung. Man erkennt hier das erste Blasformträgerteil 6a und das zweite Blasformträgerteil 6b, welche schwenkbar bezüglich einer gemeinsamen Schwenkachse Y1 zum Öffnen und Schließen der Blasstation vorgesehen sind. Das Bezugszeichen 72 kennzeichnet einen Träger zum Tragen der Blasformträgerteile 6a, 6b und die Bezugszeichen 76 und 78 zwei Hebel, die jeweils bevorzugt starr an den Blasformträgerteilen 6a und 6b angeordnet sind. Über einen (nicht gezeigten) Antriebsmechanismus können die Schwenkbewegungen der Blasformträgerteile 6a und 6b bewirkt werden. Im Inneren der Blasformträgerteile 6a und 6b ist eine Blasform (nicht gezeigt) aufgenommen bzw. gehalten.
Das Bezugszeichen 82 bezieht sich auf ein erstes Verriegelungselement, welches an dem zweiten Blasformträgerteil 6b angeordnet ist und das Bezugszeichen 84 auf ein zweites Verriegelungselement, welches hier an dem ersten Blasformträgerteil 6a angeordnet ist. Dabei ist das zweite Verriegelungselement hier starr an dem Blasformträgerteil 6a angeordnet, während das erste Verriegelungselement 82 schwenkbar um eine Schwenkachse Z angeordnet ist. Die Blasstation 8 ist hier mit dem erwähnten Träger 72 an dem Hauptträger 2 angeordnet und bewegt sich insgesamt entlang des Pfeils P1.

Das Bezugszeichen 92 kennzeichnet ein magnetisches Element, welches hier einen Elektromagneten 94 aufweist. Durch Aktivierung dieses Elektromagneten 94 kann ein weiterer Magnet 96 oder ein magnetisches Element 96 angezogen werden, wobei dieses weitere magnetische Element fest mit dem ersten Verriegelungselement 82 verbunden ist. Durch dieses Anziehen des weiteren magnetischen Elements 96 wird das Verriegelungselement hier um die Schwenkachse im Uhrzeigersinn geschwenkt und kann damit in das zweite Verriegelungselement 84 eingreifen. Das Bezugszeichen 80 kennzeichnet den Verriegelungsmechanismus in seiner Gesamtheit.

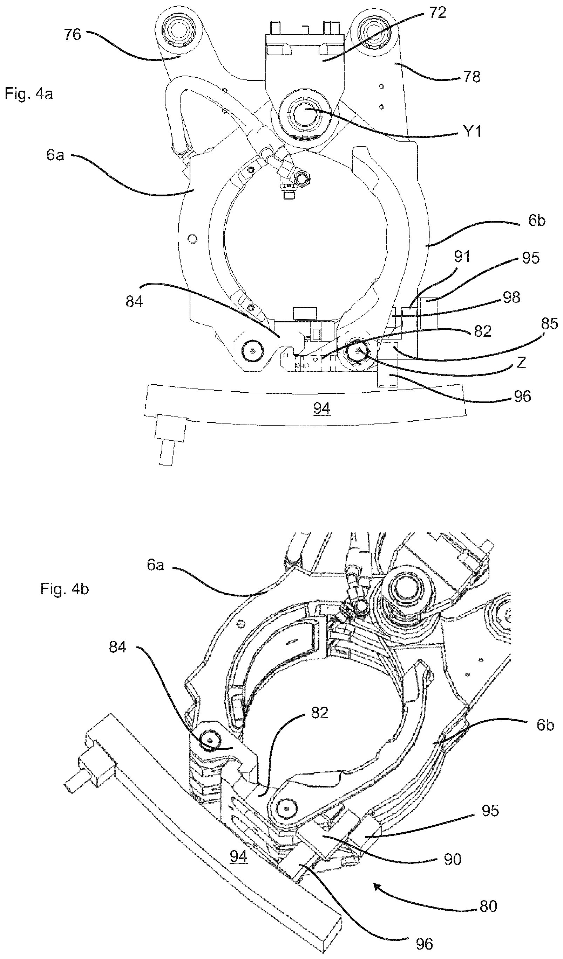

Figuren 4a, 4b zeigen einen entsprechenden geschlossenen Zustand der Blasstation, d. h. einen Zustand, in dem das erste Verriegelungselement 82 in das zweite Verriegelungselement 84 eingreift. Das Bezugszeichen 95 kennzeichnet einen Haltemagneten, der mit einem magnetisierbaren Element 91, welches ebenfalls fest an dem Verriegelungselement 82 angeordnet ist, zusammenwirkt und so das erste Verriegelungselement mit einer vorgegebenen magnetischen Kraft in der Verriegelungsstellung hält. Dieser Haltemagnet 95 stellt damit das oben erwähnte zweite magnetische Element dar.

Durch Ummagnetisierung des Magneten 94 wäre es möglich, dass das erste Verriegelungselement 82 wieder entgegen dem Uhrzeigersinn geschwenkt wird und so die Verriegelung freigegeben wird.

Dabei können die einzelnen magnetischen Kräfte derart ausgelegt sein, dass die Kraft des Magneten 95 durch den Elektromagneten 94 überwunden werden kann.

Die Vorrichtung weist darüber hinaus einen weiteren Magneten 98 (das oben erwähnte dritte magnetische Element) auf, der das Verriegelungselement 82 in einer geöffneten Stellung halten kann bzw. der beim Öffnen des Verriegelungselements den Magneten 91 anzieht, sodass das Verriegelungselement 82 in der geöffneten Stellung gehalten wird.

Vorzugsweise sind dabei der Magnet 95 und/oder der Magnet 98 jeweils als Permanentmagneten ausgeführt. Damit sind vorteilhaft alle Magneten, die an dem Verriegelungselement angeordnet sind, hier als Permanentmagneten ausgeführt.

Zum Verriegeln des Formträgers vor dem Blasvorgang im Rundlauf zieht daher ein stationärer Elektromagnet, an dem der Formträger bzw. die Blasstation 8 vorbeifährt, den Schwenkhebel 85 und damit das Verriegelungselement an. Der Schwenkhebel ist dabei, wie gesagt, fest an dem beweglichen Verriegelungselement 82 angeordnet. Der Haken 82a des ersten Verriegelungselements greift auf diese Art und Weise in die Kontur 84a des festangeordneten zweiten Verriegelungselements 84.

Der äußere Magnet 95 hält nach Verlassen des elektromagnetischen Feldes das erste Verriegelungselement 82 in der Verriegelungsposition.

Zum Entriegeln des Formträgers (vgl. Fig. 3a, b) nach dem Blasvorgang im Rundlauf, stößt ein zweiter, entgegengesetzter gepolter stationärer Elektromagnet, an dem der Formträger vorbeifährt, den Schwenkhebel 85 ab. Der Schwenkhebel ist, wie erwähnt, an dem ersten Verriegelungselement 82 montiert, sodass der Haken 82a des ersten Verriegelungselements 82 aus der Kontur 84a des festen zweiten Verriegelungselements schwenkt. Der Magnet 98 hält nach Verlassen des elektromagnetischen Feldes das erste Verriegelungselement in der Entriegelungsposition. Statt der Elektromagneten 94 wäre es auch möglich, starke Dauermagneten zum Einsatz zu bringen, die jedoch geeignet sein müssen, um die Kräfte der haltenden Permanentmagneten 95 und 98 bei der Ansteuerung zu überwinden. Der Vorteil in der Verwendung eines Elektromagneten liegt darin, dass er für Montage- und Einrichtarbeiten abschaltbar ist und zudem keinen Einfluss auf Werkzeuge hat. Der Vorteil eines Dauermagneten besteht darin, dass er keinen Energieverbrauch verursacht.

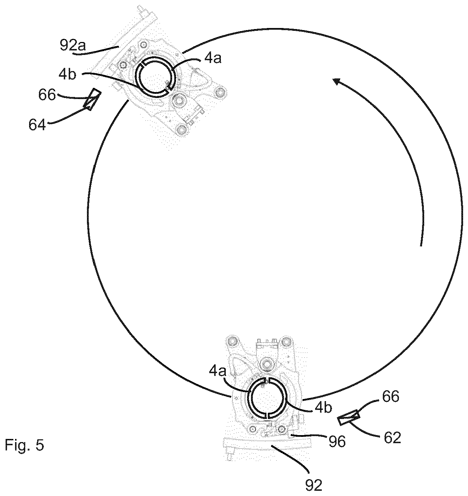

Fig. 5 zeigt eine weitere Darstellung zur Veranschaulichung der Erfindung. Hier ist wiederum ein Träger bzw. ein Blasrad 2 dargestellt, an dem eine Vielzahl von Blasstationen 8 (nur zwei gezeigt) angeordnet sind. Dabei dient das erste magnetische Element 92 zum Öffnen des Verriegelungselements 82, wie oben beschrieben, und ein zweites magnetisches Element 92a dient zum Rückstellen des Verriegelungselements bzw. zum Öffnen der Verriegelung, damit anschließend die Blasstation 8 wieder geöffnet werden kann. Die Bezugszeichen 4a, 4b beziehen sich auf die Blasformteile.

Das Bezugszeichen 62 kennzeichnet ein mechanisch wirkendes Bewegungserzeugungselement, welches auf dem Transportpfad P der Blasstationen nach dem Elektromagneten 94 bzw. magnetischen Element 92 angeordnet ist. Dieses mechanische wirkende Bewegungserzeugungselement bzw. Stellglied 62 bewirkt eine Schwenkbewegung des Verriegelungselements 82, falls dieses an der Position des magnetischen Elements 96 noch nicht verriegelt ist. Zu diesem Zweck kann das Bewegungserzeugungselement 62 eine Schrägfläche 66 aufweisen, die mit einem unter dem Magnet angeordneten (nicht gezeigten) Vorsprung zusammenwirkt. Dabei ist dieses mechanisch wirkende Bewegungserzeugungselement 62 derart angeordnet, dass es den Magneten 96 bzw. den besagten Vorsprung nicht kontaktiert, wenn das Verriegelungselement 82 an dieser Position bereits verriegelt ist. Damit fungiert das mechanisch wirkende Bewegungserzeugungselement 62 als Notverriegelungselement, falls die magnetisch wirkende Verriegelung versagen sollte.

Das Bezugszeichen 64 bezieht sich auf ein weiteres mechanisch wirkendes Bewegungserzeugungselement, welches entsprechend in der Bewegungsrichtung der Blasstation 8 nach dem zweiten magnetischen Element 92a angeordnet ist und ebenfalls zum Entriegeln der Blasstation dient, falls das zweite magnetische Element das Verriegelungselement an dieser Position noch nicht zurückgestellt haben sollte. Damit kontaktiert auch das weitere mechanisch wirkende Bewegungserzeugungselement den Magneten bzw. den Schwenkhebel 85 nur, wenn die magnetische Entriegelung versagt haben sollte. Auch dieses zweite Bewegungserzeugungselement kann dabei eine Schrägfläche 64 aufweisen.

### Bezugszeichenliste

- 1: Umformungseinrichtung, Vorrichtung
- 2: Transportrad
- 4: Blasform
- 5: Reckstange
- 6: Blasformträger
- 6a, 6b: Blasformträgerteil
- 8: Umformungsstation, Blasstation
- 9: Führungskurve
- 10: Kunststoffvorformlinge
- 10a: Behältnis
- 11: Folgeeinrichtung
- 12: Schlitten
- 13: Boden
- 14: Faltenbalg
- 17: Deckel
- 18: Wandung
- 19: Seitenwand
- 20: Reinraum
- 21: weitere Haltung
- 22: Zuführeinrichtung
- 23: Halteeinrichtung
- 24: Abführeinrichtung
- 25: Dichtungseinrichtung
- 26: Träger
- 28: Träger
- 29: Haltekörper
- 30: Heizeinrichtung
- 31: Heizelemente
- 32: Sterilisationseinrichtung
- 34: Transporteinrichtung
- 36: Übergabeeinheit
- 37: Transportrad
- 40: Befüllungseinrichtung
- 42: Übergabeeinheit
- 44: Transporteinheit
- 50: Anlage
- 55: Sterilisationseinrichtung
- 62: mechanisch wirkendes Bewegungserzeugungselement, Stellglied
- 64: mechanisch wirkendes Bewegungserzeugungselement
- 66: Schrägfläche
- 72: Träger
- 76, 78: Hebel
- 80: Verriegelungsmechanismus
- 82: erstes Verriegelungselement,
- 82a: Haken
- 84: zweites Verriegelungselement
- 84a: Kontur
- 85: Schwenkhebel
- 91: magnetisierbares Element
- 92: erstes magnetisches Element
- 92a: zweites magnetisches Element
- 94: Elektromagnet
- 95: Haltemagnet, Permanentmagnet
- 96: Magnet, magnetisches Element
- 98: Magnet, Permanentmagnet
- L: Außenbegrenzung
- P: Transportpfad
- P1: Pfeil
- U: unsterile Umgebung
- X: Richtung
- Y: Richtung
- Y1: Schwenkachse der Blasformträgerteile
- Z: Schwenkachse des Verriegelungselements 82

## Patentansprüche

1. Vorrichtung (1) zum Umformen von Kunststoffvorformlingen (10) zu Kunststoffbehältnissen (10a) mit wenigstens einer an einem beweglichen Träger (2) angeordneten Blasstation (8), wobei diese Blasstation (8) einen Blasformträger zum Halten einer Blasform (4a, 4b) aufweist und dieser Blasformträger ein erstes Blasformträgerteil (6a) und ein zweites Blasformträgerteil (6b), welches gegenüber dem ersten Blasformträgerteil (6a) bezüglich einer vorgegebenen ersten Schwenkachse (Y1) schwenkbar ist aufweist, um die Blasform (4a, 4b) zu öffnen und zu schließen und wobei die Blasstation (8) weiterhin einen Verriegelungsmechanismus (80) aufweist, um das erste Blasformträgerteil (6a) gegenüber dem zweiten Blasformträgerteil (6b) zu verriegeln und der Verriegelungsmechanismus (80) ein erstes zumindest mittelbar an dem ersten Blasformträgerteil (6a) angeordnetes Verriegelungselement (82) und ein zweites zumindest mittelbar an dem zweiten Blasformträgerteil (6b) angeordnetes Verriegelungselement (84) aufweist, wobei in einem verriegelten Zustand der Blasformträgerteile (6a, 6b) die Verriegelungselemente (82, 84) zusammenwirken, wobei die Vorrichtung (1) ein erstes wenigstens zeitweise magnetisches Element (92) aufweist, bezüglich dessen das erste Verriegelungselement (82) beweglich ist und welches durch eine magnetische Wechselwirkung berührungslos eine Bewegung des ersten Verriegelungselements (82) zum Verriegeln der Blasformträgerteile (6a, 6b) bewirkt, um somit mit Hilfe des wenigstens zeitweise magnetischen Elements (92) eine berührungslose und somit reibfreie wartungslose Lösung geschaffen wird , um die Verriegelung der Blasform (4a, 4b) zu bewirken, und wobei das erste Verriegelungselement (82) bezüglich einer zweiten vorgegebenen Schwenkachse (Z) schwenkbar ist, und wobei diese zweite Schwenkachse (Z), bezüglich derer das erste Verriegelungselement (82) schwenkbar ist, im Wesentlichen parallel zu der Schwenkachse (Y1), um welche das Blasformträgerteil (6a, 6b) schwenkbar ist, verläuft.

2. Vorrichtung nach Anspruch 1,
**dadurch gekennzeichnet, dass**
das magnetische Element (92) stationär gegenüber der Blasstation (8) angeordnet ist.

3. Vorrichtung (1) nach wenigstens einem der vorangegangenen Ansprüche,
**dadurch gekennzeichnet, dass**
das magnetische Element (92) einen Elektromagneten (94) aufweist.

4. Vorrichtung (1) nach wenigstens einem der vorangegangenen Ansprüche,
**dadurch gekennzeichnet, dass**
an der Blasstation (8) ein zweites magnetisches Element (95) vorgesehen ist, welches das Verriegelungselement (82) zeitweise in einer Verriegelungsstellung hält.

5. Vorrichtung (1) nach Anspruch 4,
**dadurch gekennzeichnet, dass**
an der Blasstation (8) ein drittes magnetisches Element (98) vorgesehen ist, welches das erste Verriegelungselement (82) zeitweise in einer nicht verriegelten Stellung hält.

6. Vorrichtung (1) nach wenigstens einem der vorangegangenen Ansprüche,
**dadurch gekennzeichnet, dass**
die Vorrichtung (1) ein stationär angeordnetes Bewegungserzeugungselement (62) aufweist, welches das Verriegelungselement (82) bewegt.

7. Vorrichtung (1) nach zumindest einem der vorhergehenden Ansprüche,
**dadurch gekennzeichnet, dass**
die Vorrichtung (1) ein viertes wenigstens zeitweise magnetisches Element (92a) aufweist, bezüglich dessen das erste Verriegelungselement (82) beweglich ist und welches durch eine magnetische Wechselwirkung eine Bewegung des ersten Verriegelungselements (82) zum Entriegeln der Blasformträgerteile (6a, 6b) bewirkt.

8. Vorrichtung (1) nach zumindest einem der Ansprüche 4 bis 7, **dadurch gekennzeichnet, dass**
das erste magnetische Element (92) und das zweite magnetische Elemente (92a) an unterschiedlichen Stellen entlang des Bewegungspfades der Blasstation (8) angeordnet sind.

9. Verfahren zum Umformen von Kunststoffvorformlingen (10) zu Kunststoffbehältnissen (10a), wobei der Kunststoffvorformling (10) in einer an einem beweglichen Träger (2) angeordneten Blasstation (8) zu dem Kunststoffbehältnis (10a) umgeformt wird und wobei die Blasstation (8) ein erstes bezüglich einer ersten Schwenkachse (Y1) schwenkbares Blasformträgerteil (6a) und ein zweites Blasformträgerteil (6b) aufweist und wobei das erste Blasformträgerteil (6a) und das zweite Blasformträgerteil (6b) bezüglich einander mittels eines Verriegelungsmechanismus (80) verriegelt werden und wobei zum Verriegeln der Blasformträgerteile (6a, 6b) ein erstes Verriegelungselement (82) eine Bewegung bezüglich einer zweiten Achse (X) ausführt, wobei das erste Verriegelungselement (82) durch eine magnetische Kraft in eine Verriegelungsstellung gedrängt wird, wobei die magnetische Kraft durch ein magnetisches Element (92) erzeugt wird, dem gegenüber das erste Verriegelungselement (82) beweglich angeordnet ist, um somit mit Hilfe des wenigstens zeitweise magnetischen Elements (92) eine berührungslose und somit reibfreie wartungslose Lösung geschaffen wird, um die Verriegelung der Blasform (4a, 4b) zu bewirken, und wobei das erste Verriegelungselement (82) bezüglich einer zweiten vorgegebenen Schwenkachse (Z) verschwenkt wird, und wobei diese zweite Schwenkachse (Z), bezüglich derer das erste Verriegelungselement (82) verschwenkt wird, im Wesentlichen parallel zu der Schwenkachse (Y1), um welche das Blasformträgerteil (6a, 6b) schwenkbar ist, verläuft.

## Claims

1. An apparatus (1) for the shaping of plastics material preforms (10) into plastics material containers (10a) with at least one blow moulding station (8) arranged on a movable carrier (2), wherein this blow moulding station (8) has a blow mould carrier for holding a blow mould (4a, 4b) and this blow mould carrier has a first blow mould carrier part (6a) and a second blow mould carrier part (6b) which is pivotable with respect to the first blow mould carrier part (6a) about a preset first pivot axis (Y1) in order to open and close the blow mould (4a, 4b), and wherein the blow moulding station (8) additionally has a locking mechanism (80) in order to lock the first blow mould carrier part (6a) with respect to the second blow mould carrier part (6b), and the locking mechanism (80) has a first locking element (82), arranged at least indirectly on the first blow mould carrier part (6a), and a second locking element (84), arranged at least indirectly on the second blow mould carrier part (6b), wherein the locking elements (82, 84) cooperate in a locked state of the blow mould carrier parts (6a, 6b),
wherein the apparatus (1) has a first element (92) which is magnetic at least for a time and with respect to which the first locking element (82) is movable and which causes a movement of the first locking element (82) by a magnetic interaction without contact in order to lock the blow mould carrier parts (6a, 6b) in order to create a contactless and thus maintenance-free solution without friction with the help of the magnetic element (92) at least temporarily to lock the blow mould (4a, 4b) in place, and wherein the first locking element (82) is pivotable with respect to a second preset pivot axis (Z), and wherein said second pivot axis (Z), with respect to which the first locking element (82) is pivotable, extends substantially parallel to the pivot axis (Y1) about which the blow mould carrier part (6a, 6b) is pivotable.

2. An apparatus (1) according to claim 1,
**characterized in that**
the magnetic element (92) is arranged in a stationary manner with respect to the blow moulding station (8).

3. An apparatus (1) according to at least one of the preceding claims,
**characterized in that**
the magnetic element (92) has an electromagnet (94).

4. An apparatus (1) according to at least one of the preceding claims,
**characterized in that**
a second magnetic element (95), which holds the locking element (82) for a time in a locking position, is provided on the blow moulding station (8).

5. An apparatus (1) according to claim 4,
**characterized in that**
a third magnetic element (98) which holds the first locking element (82) for a time in a non-locked position is provided on the blow moulding station (8).

6. An apparatus (1) according to at least one of the preceding claims,
**characterized in that**
the apparatus (1) has a movement generation element (62) which is arranged so as to be stationary and which moves the locking element (82).

7. An apparatus (1) according to at least one of the preceding claims,
**characterized in that**
the apparatus (1) has a fourth element (92a) which is magnetic at least for a time and with respect to which the first locking element (82) is movable and which causes a movement of the first locking element (82) by a magnetic interaction in order to unlock the blow mould carrier parts (6a, 6b).

8. An apparatus (1) according to at least one of the claims 4 - 7,
**characterized in that**
the first magnetic element (92) and the second magnetic elements (92a) are arranged at different locations along the movement path of the blow moulding station (8).

9. A method of shaping plastics material preforms (10) into plastics material containers (10a), wherein the plastics material preform (10) is shaped to the plastics material container (10a) in a blow moulding station (8) arranged on a movable carrier (2), and wherein the blow moulding station (8) has a first blow mould carrier part (6a) pivotable with respect to a first pivot axis (Y1) and a second blow mould carrier part (6b), and wherein the first blow mould carrier part (6a) and the second blow mould carrier part (6b) are locked with respect to each other by means of a locking mechanism (80), and wherein a first locking element (82) performs a movement with respect to a second axis (X) in order to lock the blow mould carrier parts (6a, 6b),
wherein the first locking element (82) is forced into a locking position by a magnetic force, wherein the magnetic force is generated by a magnetic element (92) which is arranged so as to be movable with respect to the first locking element (82), in order to create a contactless and thus frictionless maintenance-free solution with the help of the at least temporarily magnetic element (92), to lock the blow mould (4a, 4b) in place, and wherein the first locking element (82) is pivotable with respect to a second preset pivot axis (Z), and wherein said second pivot axis (Z), with respect to which the first locking element (82) is pivotable, extends substantially parallel to the pivot axis (Y1) about which the blow mould carrier part (6a, 6b) is pivotable.

## Revendications

1. Dispositif (1) de transformation d'ébauches en matière plastique (10) en récipients en matière plastique (10a), comprenant au moins une station de soufflage (8) agencée sur un support (2) mobile, dans lequel cette station de soufflage (8) comprend un support de moule de soufflage destiné à retenir un moule de soufflage (4a, 4b) et ce support de moule de soufflage comprend une première partie de support de moule de soufflage (6a) et une deuxième partie de moule de soufflage (6b), laquelle peut pivoter vis-à-vis de la première partie de moule de soufflage (6a) par rapport à un premier axe de pivotement (Y1) prédéfini, afin d'ouvrir et de fermer le moule de soufflage (4a, 4b) et dans lequel la station de soufflage (8) comprend en outre un mécanisme de verrouillage (80), afin de verrouiller la première partie de support de moule de soufflage (6a) vis-à-vis de la deuxième partie de support de moule de soufflage (6b) et le mécanisme de verrouillage (80) comprend un premier élément de verrouillage (82) agencé au moins indirectement sur la première partie de support de moule de soufflage (6a) et un deuxième élément de verrouillage (84) agencé au moins indirectement sur la deuxième partie de support de moule de soufflage (6b), dans lequel les éléments de verrouillage (82, 84) coopèrent lorsque les parties de support de moule de soufflage (6a, 6b) se trouvent dans un état verrouillé,
dans lequel le dispositif (1) comprend un premier élément magnétique (92) au moins par intermittence, par rapport auquel le premier élément de verrouillage (82) est mobile et lequel provoque, à la suite d'une interaction magnétique sans contact, un déplacement du premier élément de verrouillage (82) pour le verrouillage des parties de support de moule de soufflage (6a, 6b), afin qu'une solution sans contact et donc sans entretien et sans friction soit créée à l'aide dudit au moins un élément magnétique (92) au moins par intermittence, afin de provoquer le verrouillage du moule de soufflage (4a, 4b), et dans lequel le premier élément de verrouillage (82) peut pivoter par rapport à un deuxième axe de pivotement (Z) prédéfini, et dans lequel ce deuxième axe de pivotement (Z), par rapport auquel le premier élément de verrouillage (82) peut pivoter, s'étend sensiblement parallèlement à l'axe de pivotement (Y1) autour duquel la partie de support de moule de soufflage (6a, 6b) peut pivoter.

2. Dispositif selon la revendication 1,
**caractérisé en ce que**
l'élément magnétique (92) est monté fixe par rapport à la station de soufflage (8).

3. Dispositif (1) selon au moins l'une des revendications précédentes,
**caractérisé en ce que**
l'élément magnétique (92) comprend un électroaimant (94).

4. Dispositif (1) selon au moins l'une des revendications précédentes,
**caractérisé en ce que**
un deuxième élément magnétique (95), lequel retient l'élément de verrouillage (82) par intermittence dans une position de verrouillage, est prévu sur la station de soufflage (8).

5. Dispositif (1) selon la revendication 4,
**caractérisé en ce que**
un troisième élément magnétique (98), lequel maintient par intermittence le premier élément de verrouillage (82) dans une position non verrouillée, est prévu sur la station de soufflage (8).

6. Dispositif (1) selon au moins l'une des revendications précédentes,
**caractérisé en ce que**
le dispositif (1) comprend un élément de génération de déplacement (62) monté fixe, lequel déplace l'élément de verrouillage (82).

7. Dispositif (1) selon au moins l'une des revendications précédentes,
**caractérisé en ce que**
le dispositif (1) comprend un quatrième élément magnétique (92a) au moins par intermittence, par rapport auquel le premier élément de verrouillage (82) est mobile et lequel, à la suite d'une interaction magnétique, provoque un déplacement du premier élément de verrouillage (82) pour le déverrouillage des parties de support de moule de soufflage (6a, 6b).

8. Dispositif (1) selon au moins l'une des revendications 4 à 7,
**caractérisé en ce que**
le premier élément magnétique (92) et le deuxième élément magnétique (92a) sont agencés en des emplacements différents le long du trajet de déplacement de la station de soufflage (8).

9. Procédé de transformation d'ébauches en matière plastique (10) en récipients en matière plastique (10a), dans lequel l'ébauche en matière plastique (10) est transformée en récipient en matière plastique (10a) dans une station de soufflage (8) agencée sur un support (2) mobile et dans lequel la station de soufflage (8) comprend une première partie de support de moule de soufflage (6a) pouvant pivoter par rapport à un premier axe de pivotement (Y1) et une deuxième partie de support de moule de soufflage (6b) et la première partie de support de moule de soufflage (6a) et la deuxième partie de support de moule de soufflage (6b) sont verrouillées l'une par rapport à l'autre au moyen d'un mécanisme de verrouillage (80) et dans lequel un premier élément de verrouillage (82) effectue un déplacement par rapport à un deuxième axe (X) pour le verrouillage des parties de support de moule de soufflage (6a, 6b),
dans lequel le premier élément de verrouillage (82) est poussé par une force magnétique dans une position de verrouillage, dans lequel la force magnétique est générée par un élément magnétique (92) vis-à-vis duquel le premier élément de verrouillage (82) est monté mobile, afin de créer ainsi une solution sans contact et donc sans entretien et sans friction à l'aide dudit au moins un élément magnétique (92) au moins par intermittence, afin de provoquer le verrouillage du moule de soufflage (4a, 4b), et dans lequel le premier élément de verrouillage (82) est amené à pivoter vis-à-vis d'un deuxième axe de pivotement (Z) prédéfini, et dans lequel ce deuxième axe de pivotement (Z), par rapport auquel le premier élément de verrouillage (82) est amené à pivoter, s'étend sensiblement parallèlement à l'axe de pivotement (Y1) autour duquel la partie de support de moule de soufflage (6a, 6b) peut pivoter.
